# EUROPÄISCHE PATENTANMELDUNG

(11) **EP 4 645 675 A1**
(43) Veröffentlichungstag der Anmeldung: **05.11.2025**
(21) Anmeldenummer: 24174027.3
(22) Anmeldetag: 03.05.2024
(51) Int. Cl.: H02P 6/16

(54) **STEUERVORRICHTUNG FÜR EINEN ELEKTRISCHEN MOTOR SOWIE ELEKTRISCHER MOTOR**

(71) Anmelder: Siemens Aktiengesellschaft, 80333 München (DE)
(72) Erfinder: Gutzmer, Marcus, 30827 Garbsen (DE); Rumpel, Martin, 30880 Laatzen (DE); Spannberger, Jan, 31535 Neustadt am Rübenberge (DE); Wittkowski, Michael, 48291 Telgte (DE)
(74) Vertreter: Siemens Patent Attorneys

(57) **Zusammenfassung**

Die Erfindung betrifft eine Steuervorrichtung (14) für einen elektrischen Motor (10), mit zumindest einer Leiterplatte (16) und mit mindestens einem Sensorelement (18) zum Bestimmen eines Drehwinkels des elektrischen Motors (10), wobei das Sensorelement (18) auf der Leiterplatte (16) angeordnet ist, wobei auf der Leiterplatte (16) zusätzlich eine programmierbare Logikeinrichtung (20) ausgebildet ist, welche zum Steuern und/oder Überwachen des elektrischen Motors (14) und des Sensorelements (18) ausgebildet ist. Ferner betrifft die Erfindung einen elektrischen Motor (10).

## Beschreibung

Die Erfindung betrifft eine Steuervorrichtung für einen elektrischen Motor, mit mindestens einer Leiterplatte und mit mindestens einem Sensorelement zum Bestimmen eines Drehwinkels des elektrischen Motors, wobei das Sensorelement auf der Leiterplatte angeordnet ist. Ferner betrifft die Erfindung einen elektrischen Motor mit einer entsprechenden Steuervorrichtung.

Aus dem Stand der Technik sind bereits elektrische Motoren bekannt, welche insbesondere mit einer Welle ausgebildet sind und ein Gehäuse aufweisen. In dem Gehäuse ist dann beispielsweise ein sogenannter Encoder mit ausgebildet, welcher insbesondere zum Erfassen des aktuellen Drehwinkels des elektrischen Motors ausgebildet ist. Auf Basis des aktuellen Drehwinkels kann dann eine entsprechende Ansteuerung realisiert werden, sodass insbesondere Steuersignale, insbesondere bezüglich der Kommutierung, erzeugt werden können, wodurch eine Steuerung des elektrischen Motors erfolgen kann.

Insbesondere die Ist-Drehwinkelermittlung des Motors wird für die betriebliche Kommutierung des Motors mit dem Umrichter und auch für die Antriebsanwendungen benötigt, welche Anforderungen an die funktionelle Sicherheit haben, insbesondere in Verbindung mit einem Umrichter.

Aufgabe der vorliegenden Erfindung ist es, eine Steuervorrichtung sowie einen elektrischen Motor zu schaffen, mittels welchen ein verbesserter Betrieb des elektrischen Motors realisiert werden kann.

Diese Aufgabe wird durch eine Steuervorrichtung sowie einen elektrischen Motor gemäß den unabhängigen Patentansprüchen gelöst. Vorteilhafte Ausgestaltungsformen sind in den Unteransprüchen angegeben.

Ein Aspekt der Erfindung betrifft eine Steuervorrichtung für einen elektrischen Motor, mit zumindest einer Leiterplatte und mit mindestens einem Sensorelement zum Bestimmen eines Drehwinkels des elektrischen Motors, wobei das Sensorelement auf der Leiterplatte angeordnet ist.

Es ist dabei vorgesehen, dass auf der Leiterplatte zusätzlich eine programmierbare Logikeinrichtung ausgebildet ist, welche zum Steuern und/oder Überwachen des elektrischen Motors und des Sensorelements ausgebildet ist.

Insbesondere kann die programmierbare Logikeinrichtung als programmierbare Hardware ausgebildet sein. Die programmierbare Logikeinrichtung kann dabei insbesondere als sogenannter Mikrocontroller ausgebildet sein. Dies ermöglicht insbesondere eine Emulation eines sogenannten EEPROM, oder eines anderen remanenten Speichers, der Steuervorrichtung des elektrischen Motors.

Insbesondere kann somit eine Erweiterung des Sensorelements um die hier beschriebenen Funktionen durch die Emulation eines externen Speichers realisiert werden. Es kann eine Nachrüstung von bestehenden Systemen beziehungsweise eine risikoarme Implementierung der neuen Funktionen auf Basis bestehender Systeme realisiert werden. Des Weiteren kann eine Authentifizierung des Sensorelements realisiert, was insbesondere zum Schutz vor Plagiaten dienen kann. Des Weiteren kann ein Schutz vor Sabotage bereitgestellt werden, was die Erhöhung der Verfügbarkeit nach sich zieht. Des Weiteren kann eine funktionale Sicherheit durch den Schutz vor Veränderungen von Parametrierungen und Erkennen von ungültigen/sabotierten Parametrierungen realisiert werden.

Insbesondere löst somit die Erfindung das Problem, dass die Steuervorrichtung, welche auch als Encoder bezeichnet werden kann, nicht nur der Erfassung des Winkels dienen soll, sondern auch Informationen über das Antriebssystem, in welchem diese verbaut sind, bereitstellen soll, wobei das Antriebssystem insbesondere als elektrischer Motor ausgebildet ist. Insbesondere können somit ein elektronisches Datenblatt des elektrischen Motors sowie motorindividuelle Kalibrierwerte, welche nicht in einem allgemeinen Datenblatt abgebildet werden können, bereitgestellt werden. Ferner kann die Steuervorrichtung dann auch als Sensor beziehungsweise Aktuator fungieren. Insbesondere können aktuelle Werte wie Temperaturen im oder am Motor, Drehmomente, Sensorsignale oder dergleichen ermittelt und beispielsweise dann an einen entsprechenden Umrichter weitergeleitet werden. Ferner können auch eine Ansteuerung einer mechanischen Haltebremse oder eine Diagnose der Haltebremse sowie die Drehmomentsteuerung realisiert werden.

Ein nochmals weiteres Problem, das erfindungsgemäß gelöst wird, ist, dass beispielsweise aufgrund des sogenannten "European Cyber Resilience Act 2023" und allgemein stärkeren Anforderungen an die Informationssicherheit auch industrielle Steuerungen als Ziel von Angriffen ausgemacht worden sind. Mit bislang verfügbaren Encodern ist nicht gewährleistet, dass eine solche Sicherheit realisiert werden kann. Erfindungsgemäß, insbesondere durch das Einsetzen der programmierbaren Logikeinrichtung, kann jedoch ein solcher Angriff entsprechend verhindert werden.

Gemäß einer vorteilhaften Ausgestaltungsform ist die programmierbare Logikeinrichtung zum Emulieren eines elektrisch löschbaren, programmierbaren, schreibgeschützten Speichers ausgebildet. Bei dem elektrisch löschbaren, programmierbaren, schreibgeschützten Speicher handelt es sich insbesondere um ein EEPROM. Insbesondere sind die EEPROM bereits standardmäßig bei elektrischen Motoren vorhanden. Die programmierbare Logikeinrichtung kann insbesondere dann zum Ersetzen dieses elektrisch löschbaren, programmierbaren schreibgeschützten Speichers ausgebildet sein. Alternativ kann die programmierbare Logikeinrichtung zusätzlich zum EEPROM eingesetzt werden. Insbesondere ist es somit ermöglicht, dass auch bei bereits bestehenden Systemen eine Verbesserung realisiert werden kann.

Eine weitere vorteilhafte Ausgestaltungsform sieht vor, dass das Sensorelement als Magnetfeldsensor ausgebildet ist. Insbesondere kann somit auf Basis einer magnetischen Auswertung zuverlässig ein Drehwinkel des elektrischen Motors erfasst werden.

Dabei sieht eine weitere vorteilhafte Ausgestaltungsform vor, dass der Magnetfeldsensor als ein Hallsensor ausgebildet ist. Insbesondere der Hallsensor ist bereits im Stand der Technik hinlänglich bekannt und weist vorteilhafte Eigenschaften für die Erfassung des Drehwinkels auf. Auch ein GMR-Sensor oder TMR-Sensor kann eingesetzt werden. Es sind auch weitere Winkelerfassungsmöglichkeiten, beispielsweise kapazitiv, oder optisch oder induktiv oder mittels Resolver möglich.

Weiterhin vorteilhaft ist, wenn die Steuervorrichtung zum Anordnen an einem Gehäuse des elektrischen Motors ausgebildet ist. Insbesondere kann beispielsweise die Steuervorrichtung um eine Welle des elektrischen Motors herum angeordnet werden. Somit kann eine direkte Erfassung der entsprechenden Daten innerhalb des Gehäuses realisiert werden. Dies ermöglicht eine sehr genaue Erfassung der Parameter sowie einen Schutz der Steuervorrichtung vor äußeren Einflüssen. Des Weiteren kann der elektrische Motor äußerst kompakt bereitgestellt werden.

Es hat sich weiterhin als vorteilhaft erwiesen, wenn das Sensorelement zum Erfassen eines Winkels einer Welle des elektrischen Motors ausgebildet ist. Somit kann insbesondere eine Winkelmessung der Welle des elektrischen Motors realisiert werden, wodurch auf einfache Art und Weise und dennoch zuverlässig die aktuelle Position des Motors und somit entsprechende Steuersignale erzeugt werden können.

Weiterhin vorteilhaft ist, wenn die programmierbare Logikeinrichtung zum Erzeugen von Steuersignalen für den elektrischen Motor ausgebildet ist. Beispielsweise kann die programmierbare Logikeinrichtung Steuersignale für einen Frequenzumrichter erzeugen, um eine entsprechende Ansteuerung des elektrischen Motors realisieren zu können.

Gemäß einer weiteren vorteilhaften Ausgestaltungsform weist die programmierbare Logikeinrichtung eine I²C-Kommunikationsschnittstelle auf. Insbesondere kann beispielsweise die I²C-Kommunikationsschnittstelle mit dem Sensorelement kommunizieren. Es sind selbstverständliche auch andere Kommunikationsschnittstellen, wie beispielsweise SPI, Adress-Datenbus, Microwire, proprietärer Bus, proprietäres Interface oder dergleichen einsetzbar. Somit kann eine zuverlässige Kommunikation zwischen den einzelnen Komponenten innerhalb des elektrischen Motors realisiert werden.

Es hat sich weiterhin als weiterhin erwiesen, wenn das Sensorelement zum Erfassen einer Temperatur des elektrischen Motors ausgebildet ist. Somit können auch entsprechende Temperaturwerte durch die programmierbare Logikeinrichtung genutzt und eine entsprechende Steuerung auch auf Basis von aktuellen Temperaturen des elektrischen Motors realisiert werden. Dadurch kann ein verbesserter Betrieb des elektrischen Motors realisiert werden.

Ferner hat es sich als vorteilhaft erwiesen, wenn die programmierbare Logikeinrichtung zum Durchführen eines Handshake-Verfahrens ausgebildet ist. Beim Handshake-Verfahren können insbesondere die entsprechenden Komponenten innerhalb des elektrischen Motors entsprechend verifiziert werden. Somit kann der Einbau von Plagiaten beziehungsweise Duplikaten verhindert werden. Somit kann ein verbesserter Betrieb der Steuervorrichtung beziehungsweise des elektrischen Motors realisiert werden.

Dabei kann weiterhin vorgesehen sein, dass das Handshake-Verfahren zertifikatsbasiert durchgeführt ist. Insbesondere weisen hierzu die Steuervorrichtung beziehungsweise die programmierbare Logikeinrichtung einen entsprechenden Speicherbaustein auf, in welchem Zertifikate gespeichert werden können. Die Zertifikatsabfrage kann dann sicher durchgeführt werden, wodurch ein verbesserter Betrieb des elektrischen Motors realisiert werden kann.

Es hat sich weiterhin als vorteilhaft erwiesen, wenn die programmierbare Logikeinrichtung einen Ausleseschutz aufweist. Somit kann verhindert werden, dass beispielsweise Angreifer die entsprechende programmierbare Logikeinrichtung ausgelesen und beispielsweise entsprechende Firmware, Konfigurationen oder Zertifikate bzw. Geheimnisse ausgelesen werden können. Somit kann eine entsprechende Trusted-Zone bereitgestellt werden. Dies erhöht insbesondere die Informationssicherheit für den elektrischen Motor.

Ebenfalls vorteilhaft ist, wenn die programmierbare Logikeinrichtung eine Speichereinrichtung zum Speichern von Daten aufweist. Beispielsweise können dabei die entsprechenden Winkel oder dergleichen abgespeichert werden. Ferner können beispielsweise auch Datenblätter in der Speichereinrichtung abgespeichert werden. Eine Trust Zone bietet die Möglichkeit zum sicheren Speichern von einem Geheimnis, welches für eine entsprechende eindeutige Authentifizierung gegenüber dem Frequenzumrichter herangezogen werden kann. Die Authentifizierung schützt effektiv vor Plagiaten dieses Systems. Bei Aufbau einer Zertifikatskette (Trust chain) kann zusätzlich auch die Herkunft und die Echtheit dieser Komponente verifiziert werden.

Weiterhin vorteilhaft ist, wenn die Speichereinrichtung zum Speichern von Log-Daten des elektrischen Motors ausgebildet ist. Somit können auch historische Daten des elektrischen Motors bezüglich des Betriebs entsprechend abgespeichert werden und beispielsweise für eine zukünftige Auswertung bereitgestellt werden.

Ein weiterer Aspekt der Erfindung betrifft einen elektrischen Motor mit zumindest einer Steuervorrichtung nach dem vorhergehenden Aspekt.

Vorteilhafte Ausgestaltungsformen der Steuervorrichtung sind als vorteilhafte Ausgestaltungsformen des elektrischen Motors anzusehen.

Unter einer Recheneinheit/elektronische Recheneinrichtung/programmierbare Logikeinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "readonly memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: eine schematische Perspektivansicht einer Ausführungsform eines elektrischen Motors mit einer Ausführungsform einer Steuervorrichtung; und
- FIG 2: ein schematisches Blockschaltbild gemäß einer Ausführungsform einer Steuervorrichtung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

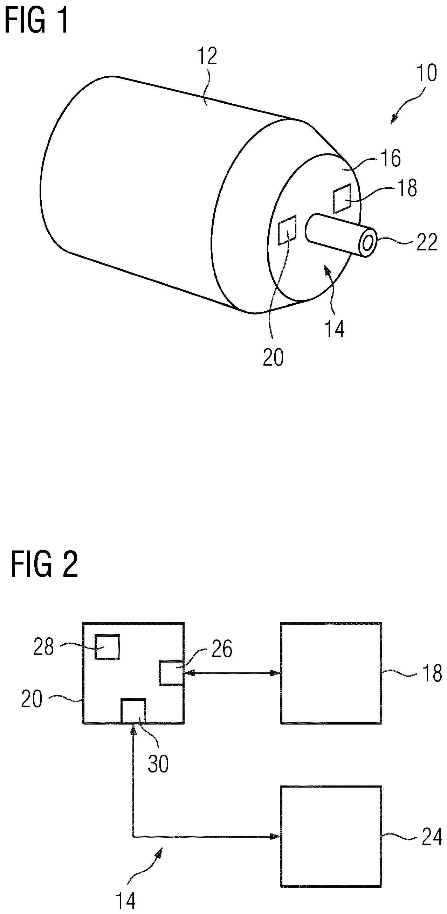

FIG 1 zeigt eine schematische Perspektivansicht einer Ausführungsform eines elektrischen Motors 10. Der elektrische Motor 10 weist in dem vorliegenden Ausführungsbeispiel ein Gehäuse 12 sowie eine Steuervorrichtung 14 auf. Die Steuervorrichtung ist insbesondere für den elektrischen Motor 10 ausgebildet und weist hierzu eine Leiterplatte 16 mit einem Sensorelement 18 zum Bestimmen eines Drehwinkels des elektrischen Motors 10 auf, wobei das Sensorelement 18 auf der Leiterplatte 16 angeordnet ist.

Ferner ist gezeigt, dass auf der Leiterplatte eine programmierbare Logikeinrichtung 20, insbesondere in Form eines Mikrocontrollers, ausgebildet ist, welche zum Steuern und/oder Überwachen des elektrischen Motors 10 und des Sensorelements 18 ausgebildet ist.

Ferner zeigt die FIG 1, dass der elektrische Motor 10 eine Welle 22 aufweisen kann. Das Sensorelement 18 ist dabei insbesondere zum Erfassen eines Winkels der Welle 22 des elektrischen Motors 10 ausgebildet.

Ferner ist insbesondere vorgesehen, dass das Sensorelement 18 als Magnetfeldsensor, insbesondere als sogenannter Hallsensor mit entsprechenden Sensormagnet, ausgebildet ist. Des Weiteren ist insbesondere gezeigt, dass die Steuervorrichtung14 zum Anordnen in dem Gehäuse 12 beziehungsweise an dem Gehäuse 12 ausgebildet ist.

FIG 2 zeigt ein schematisches Blockschaltbild gemäß einer Ausführungsform der Steuervorrichtung 14. Die FIG 2 zeigt ferner, dass die Steuervorrichtung 14 beispielsweise zum Ansteuern eines Frequenzumrichters 24 ausgebildet ist. Der Frequenzumrichter 24 ist insbesondere zum Erzeugen von entsprechenden Kommutierungssignalen für den elektrischen Motor 10 ausgebildet.

Dabei kann bevorzugt vorgesehen sein, dass die programmierbare Logikeinrichtung 20 zum Emulieren eines elektrisch löschbaren, programmierbaren schreibgeschützten Speichers (EEPROM) ausgebildet ist. Ferner kann vorgesehen sein, dass, wie bereits erwähnt, die programmierbare Logikeinrichtung 20 zum Erzeugen von Steuersignalen für den elektrischen Motor 10 ausgebildet ist, insbesondere zum Erzeugen von Steuersignalen für den Frequenzumrichter 24. Weiterhin kann vorgesehen sein, dass die programmierbare Logikeinrichtung eine I²C-Kommunikationsschnittstelle 26 aufweist. Die FC-Schnittstelle 26 kann insbesondere zum Kommunizieren mit dem Sensorelement 18. Es sind selbstverständliche auch andere Kommunikationsschnittstellen, wie beispielsweise SPI, Adress-Datenbus, Microwire, proprietärer Bus, proprietäres Interface oder dergleichen einsetzbar. Ferner ist eine weitere Kommunikationsschnittstelle 30 zur Kommunikation zwischen der programmierbaren Logikeinrichtung 20 und dem Frequenzumrichter 24 gezeigt. Diese Kommunikation kann beispielsweise mit dem Kommunikationsprotokoll SSI, BiSS, Drive-Cliq, Endat oder weitere für Encoderanbindung ausgelegte Verfahren durchgeführt werden.

Im vorliegenden Ausführungsbeispiel ist insbesondere gezeigt, dass eine direkte Kommunikation zwischen dem Frequenzumrichter 24 und der programmierbaren Logikeinrichtung 20 sowie eine direkte Kommunikation zwischen dem Sensorelement 18 und der programmierbaren Logikeinrichtung 20 vorgesehen ist. Alternativ kann auch der Frequenzumrichter 24 beispielsweise mit dem Sensorelement 18 kommunizieren und das Sensorelement 18 wiederum mit der programmierbaren Logikeinrichtung 20.

Weiterhin kann vorgesehen sein, dass das Sensorelement 18 zum Erfassen einer Temperatur des elektrischen Motors 10 ausgebildet ist. Ferner kann die programmierbare Logikeinrichtung 20 zum Durchführen eines Handshake-Verfahrens ausgebildet sein. Das Handshake-Verfahren kann dabei bevorzugt zertifikatsbasiert durchgeführt werden.

Weiterhin weist die programmierbare Logikeinrichtung 20 zumindest einen Ausleseschutz auf.

Weiterhin ist insbesondere vorgesehen, dass die programmierbare Logikeinrichtung 20 eine Speichereinrichtung 28 zum Speichern von Daten aufweist. Die Speichereinrichtung 28 kann dabei insbesondere zum Speichern von Log-Daten des elektrischen Motors 10 ausgebildet sein.

Insbesondere ist somit vorgesehen, dass die programmierbare Logikeinrichtung 20 den bereits im Stand der Technik bekannten EEPROM ersetzt beziehungsweise emuliert. Dadurch kann eine Speichererweiterung sowie eine Funktionserweiterung des bestehenden Sensorelements 18 um Funktionen wie Temperaturmessung realisiert werden. Ferner können die entsprechenden Daten geloggt werden. Weiterhin kann auch eine Encoder-Konfigurationsumschaltung realisiert werden, beispielsweise beim Verwenden an verschiedenen Motoren oder Applikationen.

Die programmierbare Logikeinrichtung 20 bietet ferner einen Ausleseschutz an und schützt somit vor einem Auslesen des internen Codes und Daten bei Angriffen, wodurch insbesondere eine sogenannte Trusted Zone gebildet wird. In der programmierbaren Logikeinrichtung 20 können Zertifikate gespeichert, erzeugt und geprüft werden. Durch den internen Rechner ist es möglich die Echtheit der Komponenten und Konfigurationsdaten zu überprüfen. Durch eine geeignete Entropiequelle kann die Sicherheit weiter erhöht werden. Die Entropiequelle ist vorteilhafterweise Bestandteil der Recheneinheit oder kann extern sein. Dadurch kann insbesondere ein Handshake zur Authentizitätsüberprüfung realisiert werden, insbesondere durch den Aufbau einer gesicherten Verbindung zwischen den Komponenten. Ferner können verschlüsselte Dateien gespeichert werden. Ein Auslesen dieser Datei über den Frequenzumrichter 24 ist dabei möglich. Dadurch kann eine Erweiterung der Trusted Zone des Frequenzumrichters 24 um den Speicher innerhalb der Steuervorrichtung 14 realisiert werden, wodurch insbesondere ein sogenanntes Pairing realisiert werden kann.

Ferner kann durch die programmierbare Logikeinrichtung 20, insbesondere durch den Mikrocontroller, eine Kryptografie und somit eine Verschlüsselung der Kommunikation realisiert werden. Auf Basis der Zertifikate können sowohl die Hardware als auch die Software und die Parametrierung entsprechend geschützt werden. Des Weiteren kann eine Zugriffssteuerung durch die oben genannten Verfahren durch verschiedene Profile, zum Beispiel unterschiedliche User, realisiert werden. Dabei kann beispielsweise nur durch einen Admin beispielsweise auch ein Lesen oder ein Schreiben von Daten sowie ein Ändern von Konfigurationen durchgeführt werden.

## Patentansprüche

1. Steuervorrichtung (14) für einen elektrischen Motor (10), mit zumindest einer Leiterplatte (16) und mit mindestens einem Sensorelement (18) zum Bestimmen eines Drehwinkels des elektrischen Motors (10), wobei das Sensorelement (18) auf der Leiterplatte (16) angeordnet ist, **dadurch gekennzeichnet, dass** auf der Leiterplatte (16) zusätzlich eine programmierbare Logikeinrichtung (20) ausgebildet ist, welche zum Steuern und/oder Überwachen des elektrischen Motors (14) und des Sensorelements (18) ausgebildet ist.

2. Steuervorrichtung (14) nach Anspruchs 1, **dadurch gekennzeichnet, dass** die programmierbare Logikeinrichtung (20) zum Emulieren einen elektrisch löschbaren, programmierbaren schreibgeschützten Speicher ausgebildet ist.

3. Steuervorrichtung (14) nach Anspruch 1 oder 2, **dadurch gekennzeichnet, dass** das Sensorelement (18) als Magnetfeldsensor ausgebildet ist.

4. Steuervorrichtung (14) nach Anspruch 3, **dadurch gekennzeichnet, dass** der Magnetfeldsensor als ein Hallsensor ausgebildet ist.

5. Steuervorrichtung (14) nach einem der vorhergehenden Ansprüche, **dadurch gekennzeichnet, dass** die Steuervorrichtung (14) zum Anordnen in einem Gehäuse (12) des elektrischen Motors (10) ausgebildet ist.

6. Steuervorrichtung (14) nach einem der vorhergehenden Ansprüche, **dadurch gekennzeichnet, dass** das Sensorelement (18) zum Erfassen eines Winkels einer Welle (22) des elektrischen Motors (10) ausgebildet ist.

7. Steuervorrichtung (14) nach einem der vorhergehenden Ansprüche, **dadurch gekennzeichnet, dass** die programmierbare Logikeinrichtung (20) zum Erzeugen von Steuersignalen für den elektrischen Motor (10) ausgebildet ist.

8. Steuervorrichtung (14) nach einem der vorhergehenden Ansprüche, **dadurch gekennzeichnet, dass** die programmierbare Logikeinrichtung (20) eine 12C-Kommunikationsschnittstelle (26) aufweist.

9. Steuervorrichtung (14) nach einem der vorhergehenden Ansprüche, **dadurch gekennzeichnet, dass** das Sensorelement (18) zum Erfassen einer Temperatur des elektrischen Motors (10) ausgebildet ist.

10. Steuervorrichtung (14) nach einem der vorhergehenden Ansprüche, **dadurch gekennzeichnet, dass** die programmierbare Logikeinrichtung (20) zum Durchführen eines Handshake-Verfahrens ausgebildet ist.

11. Steuervorrichtung (14) nach Anspruch 10, **dadurch gekennzeichnet, dass** das Handshake-Verfahren zertifikatsbasiert durchgeführt ist.

12. Steuervorrichtung (14) nach einem der vorhergehenden Ansprüche, **dadurch gekennzeichnet, dass** die programmierbare Logikeinrichtung (20) einen Auslese- und Zugriffsschutz aufweist.

13. Steuervorrichtung (14) nach einem der vorhergehenden Ansprüche, **dadurch gekennzeichnet, dass** die programmierbare Logikeinrichtung (20) eine Speichereinrichtung (28) zum Speichern von Daten aufweist.

14. Steuervorrichtung (14) nach Anspruch 13, **dadurch gekennzeichnet, dass** die Speichereinrichtung (20) zum Speichern von Log-Daten des elektrischen Motors (10) ausgebildet ist.

15. Elektrischer Motor (10) mit zumindest einer Steuervorrichtung (14) nach einem der Ansprüche 1 bis 14.
